# EUROPEAN PATENT APPLICATION

(11) **EP 2 996 105 A1**
(43) Date of publication of application: **16.03.2016**
(21) Application number: 15184619.3
(22) Date of filing: 10.09.2015
(51) Int. Cl.: G09B 23/28

(54) **AUGMENTED REALITY SURGICAL SIMULATOR, PARTICULARLY FOR DEFORMABLE ANATOMICAL STRUCTURES**

(30) Priority: 12.09.2014 IT TO20140719
(71) Applicant: Universita Di Pisa, 56126 Pisa (IT)
(72) Inventor: FERRARI, Vincenzo, I-51017 PESCIA (Pistoia) (IT); VIGLIALORO, Rosanna Maria, I-89844 NICOTERA (Vibo Valentia) (IT); CONDINO, Sara, I-56100 PISA (IT); NICOLI, Paola, I-88054 SERSALE (Catanzaro) (IT); CARBONE, Marina, I-56124 PISA (IT); CUTOLO, Fabrizio, I-55041 LIDO CAMAIORE (Lucca) (IT)
(74) Representative: Deambrogi, Edgardo

(57) **Abstract**

A surgical simulator is described, comprising a physical model (M) of at least one anatomical structure (L, G) which includes at least one model of a deformable tubular duct (AT; B) and comprises, in combination:
- a recording device (C) arranged to acquire images (I_{S}) of a background scene that includes the model (M) of an anatomical structure;
- a plurality of electromagnetic position sensors (S1-S4) associated with predetermined portions of the tubular duct model (AT; B), each of the sensors being arranged to make available, in response to an electromagnetic excitation field, an electrical location signal indicative of the position and orientation of the associated portion of the tubular duct model (AT; B);
- a processing unit (X) adapted to acquire image data (I_{S}) representing the background scene and location data (U_{P}) of the portions of the tubular duct model (AT; B) with which the plurality of sensors (S1-S4) is associated; and
- a display device (D) adapted to represent complex images (I') of an augmented reality scene, including images (I_{S}) of the background scene and additional images (I_{A}) superimposed on the images (I_{S}) of the background scene, generated by the processing unit (X) and representing the portions of the tubular duct model (AT; B).

## Description

The present invention relates to surgical simulators, and specifically to surgical simulators based on the representation of a scene with augmented reality, in particular for the production of what are known as "see-through" vision systems, or systems of transparent vision through an object, in which images of objects concealed from an operator's view are superimposed on images of a real scene.

Augmented reality can be used to enhance images acquired by means of conventional recording devices with virtual information that can be superimposed on a background scene and aligned therewith. In medicine, there is increasing interest in this type of technology, because it allows the development of new approaches to surgical simulation.

Existing surgical simulators can be divided into three groups: physical simulators, virtual reality simulators, and hybrid simulators.

Physical simulators are based on models made of plastic materials, rubber, or latex, which, in terms of shape and consistency, are highly realistic representations of anthropomorphic anatomical structures, on which a surgical practitioner can act to simulate the movements of an operative procedure. There are accurate models of organs of the human body, connective tissues, and blood vessels which are used to simulate various pathologies, and allow the performance of specific operations such as incisions, sutures, removals or reconstructions of these anatomical structures. In models of this type, tubular structures such as blood vessels are typically made of plastic material. There is also a known way of making models of blood vessels using tubular structures made of nitinol, a shape-memory alloy of nickel and titanium, and coated with silicone, enabling models with fairly realistic mechanical behaviour to be produced, as described by R. Viglialoro, V. Ferrari, M. Carbone, S. Condino, F. Porcelli, F. Di Puccio and others in the paper "A physical patient specific simulator for cholecystectomy training", published in Proceedings of Computer Assisted Radiology and Surgery (CARS), 2012.

The real interaction with the anatomical structures simulated by physical models is the main advantage of these simulators, although they commonly have the drawback of being limited to a few easily reproducible anatomical structures, and require costly replacement following training sessions which result in the destruction of the plastic model.

Virtual reality simulators reproduce a surgical scenario visually in virtual mode, and allow a practitioner to interact with an anatomy through various interfaces. However, these instruments still have the disadvantage of having insufficiently realistic interfaces from the surgical point of view, and do not provide accurate models of the interactions between the surgical instruments and a patient's anatomy, particularly during incisions, with haptic feedback effects.

In order to overcome the drawbacks of the two aforementioned approaches, a new concept of simulation, namely hybrid simulation, has been developed in the recent years, in which both practices are integrated into a single context. Hybrid simulation combines synthetic models and virtual reality, to generate augmented reality scenes which have the advantages of both physical and virtual simulation. These approaches can overcome the problems of reproducing haptic feedback in operations on human tissues and organs in an entirely virtual environment, while providing the benefits of computerized simulation, particularly as regards the evaluation of a trainee's performance, by enabling a real scene to be enhanced with virtual elements, and providing real-time instructions in the context of a simulated surgical operation for the correct performance of the required actions.

Unfortunately, although hybrid simulation, by combining the benefits and advantages of physical and virtual simulation, represents a step forward in surgical training, it has a major drawback. The representation of an augmented reality scene in which additional images, for example radiological images, are superimposed on real images makes it possible to represent anatomical structures which would otherwise be concealed, but solely in a static representation, and does not allow effective reproduction of the anatomical deformations that take place during a surgical operation on anatomical structures, particularly during dissection operations, for example, in the case of tubular structures such as portions of the vascular system.

The object of the present invention is to provide a satisfactory solution to the problems described above, while avoiding the drawbacks of the known art.

More particularly, the object of the present invention is to provide a surgical simulator which can be used to represent, in the most realistic way possible, an anatomical structure subjected to a surgical operation. A further object of the invention is to provide an effective surgical simulator which provides a hybrid experience of physical interaction, on a model of an anatomical structure, combined with virtual representation of information useful to a practitioner in the course of training.

According to the present invention, these objects are achieved by means of a surgical simulator having the characteristics claimed in Claim 1.

Specific embodiments are described in the dependent claims, the content of which is to be considered as an integral part of the present description.

Briefly, the present invention is based on the principle of producing a hybrid surgical simulator comprising a physical model of one or more anatomical structures, enhanced by an electromagnetic location method for the real-time acquisition of information representing the position and configuration of concealed anatomical structures, for example tubular structures (such as vascular ducts) concealed by connective tissue or other anatomical structures, together with a display method for representing a simulated surgical operation in an augmented reality environment. Information on the location of the concealed anatomical structures are used to enhance the real scene of a simulation of a surgical operation with virtual information, for example information concerning the position and configuration assumed by these structures during an operation, so that the practitioner can be guided to operate without causing injury to structures adjacent to the operation site, and possible errors, such as injuries to vascular structures and consequent bleeding during a dissection operation, can be simulated.

Advantageously, the electromagnetic location method is applied to models of deformable structures made of tubular nitinol structures coated with silicone, sensorized with electromagnetic position sensors.

Further characteristics and advantages of the invention will be disclosed more fully in the following detailed description of an embodiment of the invention, provided by way of non-limiting example, with reference to the attached drawings, in which:
Figure 1 is a block diagram of a surgical simulator according to the invention;
Figure 2 shows a tubular anatomical structure enhanced with location sensors in a surgical simulator according to the invention;
Figure 3 shows a calibration installation for the surgical simulator shown in Figure 1; and
Figures 4a and 4b show, respectively, a real scene and the corresponding augmented reality scene of a simulated surgical operation.

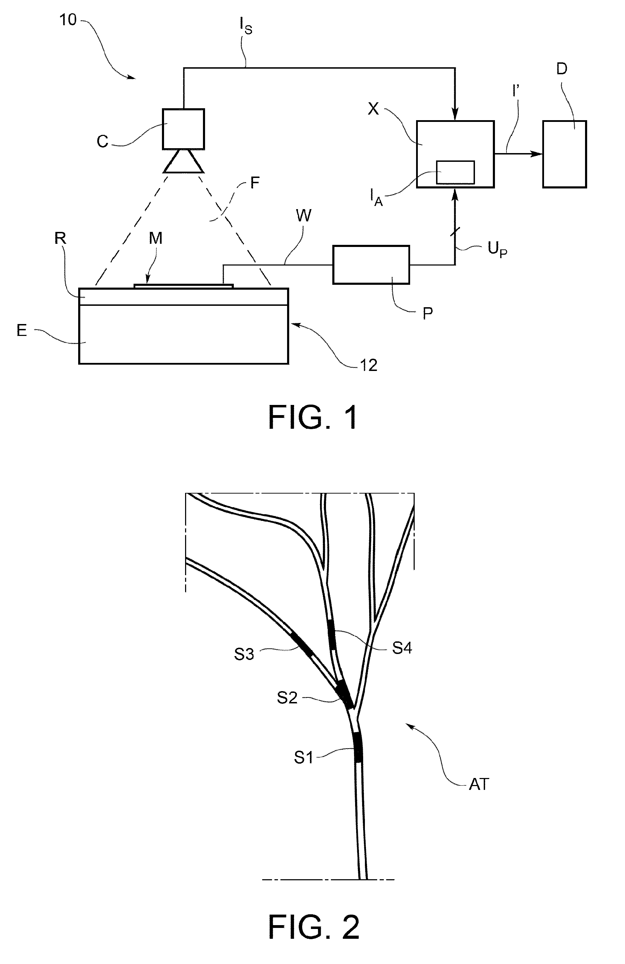

Figure 1 shows a block diagram of a surgical simulator according to the invention, indicated as a whole by 10.

An anthropomorphic anatomical model, including a physical model of at least one organ or an anatomical tissue and a model of a sensorized tubular anatomical structure associated therewith, is indicated as a whole by M.

A supporting assembly 12 for the model M during a simulated operation is placed within the field of observation F of a recording device C capable of recording a real scene, including the model M subjected to the simulated operation. Advantageously, the recording device is positioned on the upright of the supporting assembly 12 for the model M, so that the whole scene of the operation can be recorded.

The supporting assembly 12 comprises an operating plane R whose upper surface is also used to support the model M and as a calibration reference for the model M in the reference system of the recording device C.

At the supporting assembly 12, for example under the operating plane R, an apparatus is placed for emitting a predetermined electromagnetic excitation field E for the electromagnetic location of sensorized structures, as explained below.

The recording device C is coupled to processor means X to which it supplies image data I_{S} representing a background scene including the model M, acquired by the recording device C.

Electrical connections W, in a number equal to the number of sensors, run from the sensorized structure of the model M, which are adapted to carry location signals of the sensorized structure, emitted in response to the electromagnetic excitation field produced by the apparatus E, to the input of a location module P which is arranged to process data U_{P} concerning the position and orientation of the sensors associated with the model M on the basis of said location signals. The location module P is coupled to the processor means X, to which it sends the position and orientation data U_{P} relating to the sensorized structure of the model M, the processor means X being arranged to generate from these data an additional image I_{A}, representing the position and orientation of the sensorized structure of the model M, which can be superimposed on the background image I_{S} after the execution of a predetermined calibration procedure for aligning the images.

The processing means X are coupled to the input of an associated display device, for example a computer screen, adapted to represent complex images I', including images I_{S} of a background scene and additional images I_{A} superimposed on the images I_{S} of the background scene in order to provide a representation of augmented reality scenes.

With reference to Figure 2, this shows a model of a sensorized tubular anatomic structure, for example a model of a section of an arterial tree AT in a realistic topology, including substantially rectilinear segments, curved segments and bifurcations.

The arterial tree model AT is made of tubular structures of conductive material, preferably nitinol, formed by winding at least one nitinol wire, such as a wire produced by Fort Wayne Metals of Fort Wayne, Indiana, United States, in a helical direction around an axis of longitudinal extension of the duct, the structures being coated, in a currently preferred embodiment, with electrically insulating material, preferably silicone.

The arterial tree model AT further comprises a plurality of electromagnetic position sensors S1-S4. Each of these sensors is positioned on a respective rectilinear segment of the tree and is arranged to provide, in response to an externally generated electromagnetic field, an electrical signal indicating the position and orientation of the respective tree segment associated with it.

Sensors of this type can be made in the form of conductive windings (individual solenoid coils) having a diameter of 0.5 mm and a length of 8 mm, and preferably have 5 or 6 degrees of freedom. They are described, for example, in the paper by S. Condino, V. Ferrari, C. Freschi, A. Alberti, R. Berchiolli, F. Mosca and others, entitled "Electromagnetic navigation platform for endovascular surgery: how to develop sensorized catheters and guidewires", published in the journal Int. J. Med Robot, vol 8, pp. 300-310, September 2012.

Sensors S1-S4 are preferably inserted axially into the inner tubular volume of the tree segments S1-S4, arranged coaxially with the longitudinal axis of extension of the latter, although other arrangements, for example external coaxial arrangements, are equally possible. Advantageously, in the arterial tree model described here, a metal core imparts strength to the tubular structure, makes it reusable, and protects the sensors inside it, while a silicone coating makes the structure more realistic.

Each of the sensors has a respective electrical connection W passing through the inner tubular volume of the tree to connect the sensor to the external location module P (shown schematically in Figure 1). The electrical signals induced in the sensors in response to their presence in the variable electromagnetic field produced by the apparatus E are sent through this connection W to the location module P. The characteristics of these signals depend on the position and orientation of the individual sensor relative to the reference system of the apparatus for emitting the electromagnetic excitation field. In the specific case of sensors with 5 degrees of freedom, the information that is carried can be used to determine the position of the centroid of the sensor and the orientation and direction of its axis Z (the longitudinal axis of the sensor).

The data supplied by an individual sensor with six degrees of freedom, or by a pair of sensors with five degrees of freedom housed in a known position relative to the axis of a rectilinear segment of the tree model, are sufficient to describe the position and orientation of this tree segment.

A convenient arrangement of the sensors, upstream and downstream of bifurcations or curved segments of the arterial tree model, makes it possible to detect the position and orientation of predetermined segments of the model whose mutual position and orientation in space differs or can be made to differ during the simulation of a surgical operation.

The use of at least two sensors with five degrees of freedom is necessary in order to obtain the sixth degree of freedom, and thus to determine the orientation of the structure. The curvature and path of a curved segment can also be determined, using interpolation methods. On the other hand, the angle of a bifurcation interposed between two sensorized rectilinear segments can be calculated from a simple scalar product if the directions of the bifurcating rectilinear segments are known.

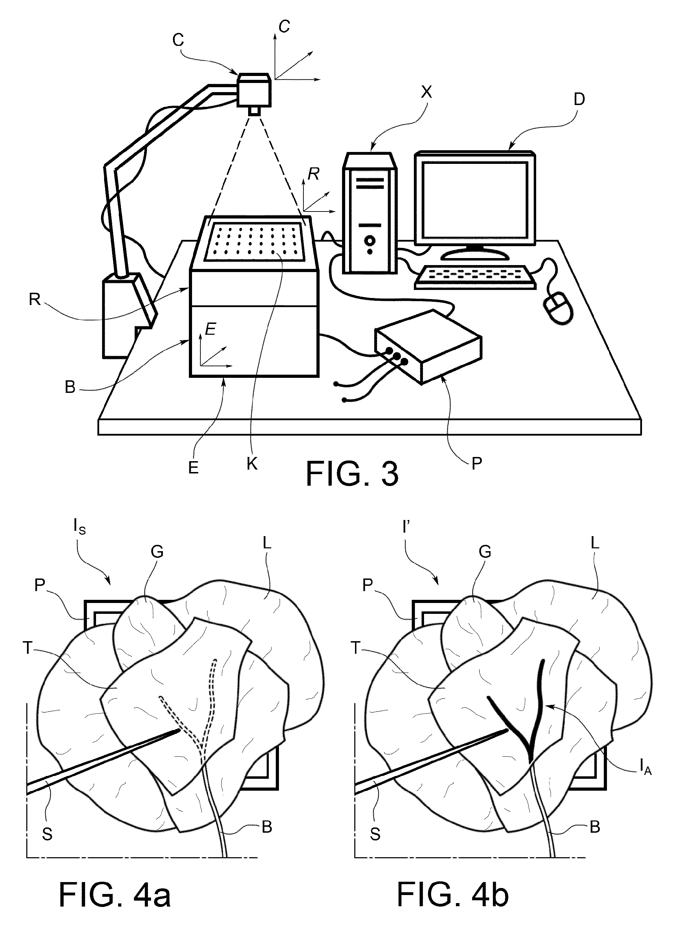

Figure 3 shows an embodiment of a calibration installation for the surgical simulator described with reference to Figures 1 and 2.

The recording device C is, for example, a USB recording device such as the UI-1221LE sensor made by IDS Imaging Development Systems GmbH of Obersulm, Germany, which has a 45° field of observation. It is conveniently placed at a predetermined distance, about 220 mm for example, above the supporting assembly 12.

The operating plane R is a box-shaped supporting surface B under which the apparatus for emitting the electromagnetic excitation field is placed. The apparatus for emitting the electromagnetic excitation field is, for example, a field generator of an Aurora V1 electromagnetic location system made by Northern Digital Inc., of Waterloo, Canada, and adapted to emit a variable low-intensity electromagnetic field. The Aurora V1 electromagnetic location system also includes the electromagnetic position sensors S1-S4 described with reference to Figure 2, sensor interface units arranged to amplify and digitize the electrical signals emitted by the sensors, and a control unit which forms the location module P.

On the surface of the operating plane R visible to the recording device C there is formed a plurality of surface markings K, in the form of circular markings for example, which are required for the execution of a calibration procedure by the processing means X.

The calibration procedure is executed by the processing means X in order to ensure the correct alignment of the additional image I_{A} generated on the basis of the location data of the sensorized segments of the model M relative to the background image I_{S} acquired by the recording means C, in the generation of a complex augmented reality image I'.

In the calibration procedure, the intrinsic parameters (that is to say, the projection parameters) and the extrinsic parameters (that is to say, the position relative to the object recorded in the scene) of the recording device are determined. The intrinsic parameters can be calculated by the method proposed by Z. Y. Zhang in "A flexible new technique for camera calibration", published in IEEE Transactions on Pattern Analysis and Machine Intelligence, vol. 22, pp. 1330-1334, November 2000. The extrinsic parameters of the recording device, in the case of the sensorized simulator according to the invention, describe the geometrical ratio between the reference system of the recording device C, to which the image I_{S} of the Model M is related, and the reference system of the apparatus for emitting the electromagnetic excitation field E, that is to say the electromagnetic location reference system, to which the location data of the sensors associated with the model M, and therefore the additional image I_{A}, are related.

In a first step, the rigid transformation ^{R}T_{E} between the reference system of the apparatus for emitting the electromagnetic excitation field E (hereinafter termed the reference system *E*) and an intermediate reference system of the operating plane R (hereinafter termed the reference system *R*) on which the markings K are arranged. The positions of at least one subset of markings K (including three distinct and distinguishable markings) present on the visible surface of the operating plane R, in the reference system *E* based on the electromagnetic location system, are acquired directly if these markings are active, that is to say, sensorized markings, or indirectly, with the aid of a sensorized pointing tool, if these markings are passive markings which are simply drawn. When the position of the centroids in the reference system *R* is known, the transformation *^{R}*T*_{E}* between the two subsets of coordinates *R* and *E* can be calculated, for example by using a least-squares error minimization algorithm as described by K.S. Arun, T.S. Huang and S.D. Blostein in the paper "Least-squares fitting of two 3D point sets", published in IEEE Transactions on Pattern Analysis and Machine Intelligence, vol 9, pp. 698-700, May 1987.

The geometrical transformation *^{C}*T*_{R}* between the reference system *R* of the operating plane and the reference system of the recording device C (hereinafter termed the reference system *C*) is then calculated, using a HALCON location procedure for example.

Finally, the product of the transformations *^{C}*T*_{R}* and *^{R}*T*_{E}* is used to calculate the transformation *^{C}*T*_{E}* between the reference system of the recording device C, to which the image I_{S} of the Model M is related, and the reference system of the apparatus for emitting the electromagnetic excitation field E, to which the location data of the sensors associated with the model M, and therefore the additional image I_{A}, are related.

A knowledge of the intrinsic and extrinsic parameters of the recording device C is essential for the correct display of the augmented reality scenes. This is because the images of virtual objects superimposed on the real scene must be made consistent with the images of the real scene, with allowance for the position and orientation of the concealed real objects, to which the representation of the additional image in the real scene corresponds.

Figures 4a and 4b show a physical model of a liver L and a gallbladder G at least partially covered by connective tissue T, which at least partially conceals the bile ducts B from the view of an operator (a surgical practitioner) who is using a scalpel S.

The liver and gallbladder model is made of plastic material by known methods, and the model of the bile ducts is made of conductive nitinol tubes coated with silicone and sensorized in predetermined segments, as described above.

Figure 4a shows an image I_{S} of a real scene acquired by the recording device C, in which the connective tissue T partially conceals the bile ducts B from view, only a lower branch of the ducts being visible.

Figure 4b shows a complex image I', including the image I_{S} of the real background scene shown in Figure 4a and an additional image I_{A} superimposed on it, representing the location of the bile ducts B concealed from view by the connective tissue T.

The image I_{A} is generated synthetically by the processing means X on the basis of the real-time location data U_{P} of the sensorized segments of the bile ducts B, by means of interpolation of the located segments and subsequent calibration between the electromagnetic location reference system and the reference system of the recording device.

Advantageously, the surgical simulator as described which is the subject of the present invention allows to adopt efficient, low-cost training systems, which are specifically enhanced in respect of the identification of deformable tubular structures by a hybrid simulation method based on augmented reality.

In a preferred embodiment, a surgical instrument such as a scalpel is provided, and is fitted with an electrically conductive probe end and connected to the ground of a power supply, adapted to detect a condition of possible injury to the arterial tree model AT. A condition of injury to the arterial tree model AT in the course of a simulated surgical operation is determined by detecting the contact of the surgical instrument with the conductive structure of the arterial tree model, connected to the negative terminal of the same power supply, following the incision of the insulating coating, resulting in the closure of the circuit formed by the conductive parts of the arterial tree AT and those of the surgical instrument. This condition of injury is communicated to the processing means by a known signalling method, for example by the wired or wireless transmission of an alarm signal emitted by an alarm circuit connected to the positive pole of said power supply. In this condition, having received said alarm signal, the processing means can generate a synthetic additional image including the colouring of an image region in the area of the segment of the arterial tree AT where contact between the surgical instrument and the conductive structure of the arterial tree model has been detected. The injury can be located by providing a sensorized surgical instrument. This colouring represents, in an intuitive way for an operator, the bleeding caused by an injury to a vascular duct.

In a particular embodiment, the alarm signal is also arranged to trigger an acoustic signal of any (involuntary) injurious contact with the arterial tree model.

Thus by coating the arterial tree model with insulating material, it is advantageously possible to distinguish a non-injurious contact from an incision in the structure.

The proposed approach combines synthetic models with virtual reality, developing an augmented reality representation of a surgical operation scene. This approach can overcome the technical difficulties of purely virtual simulators, because it provides a realistic interaction between the instruments available to a practitioner and the models of anatomical structures, while benefiting from the advantages of virtual simulation, in particular the possibility of enhancing a real scene with virtual elements superimposed on it to provide instruction in the execution of surgical operations.

Naturally, the principle of the invention remaining the same, the forms of embodiment and details of construction may be varied widely with respect to those described and illustrated, which have been given purely by way of non-limiting example, without thereby departing from the scope of protection of the present invention as defined by the attached claims.

## Claims

1. Surgical simulator, comprising a physical model (M) of at least one anatomical structure (L, G) which includes at least one model of a deformable tubular duct (AT; B), **characterized in that** it comprises in combination:
- recording means (C) arranged to acquire images (I_{S}) of a background scene that includes said model (M) of the anatomical structure;
- a plurality of electromagnetic position sensors (S1-S4) associated with predetermined portions of said model of tubular duct (AT; B), each of said sensors (S1-S4) being arranged to make available, in response to an electromagnetic excitation field, an electrical location signal indicative of the position and orientation of the associated portion of said tubular duct model (AT; B);
- location means (P) adapted to make available location data (U_{P}) relating to the portions of the tubular duct model (AT; B) with which said plurality of sensors (S 1-S4) is associated, said location means (P) including:
- means (E) for emitting a predetermined electromagnetic excitation field; and
- signal detecting means adapted to detect electrical location signals made available by said sensors (S1-S4);
- processing means (X) adapted to acquire image data (I_{S}) representing the background scene and location data (U_{P}) of the portions of the tubular duct model (AT; B) with which said plurality of sensors (S1-S4) is associated, and arranged to generate an additional image (I_{A}) representing said portions of the tubular duct model (AT; B) that can be superimposed on the background image (I_{S}); and
- display means (D) adapted to represent complex images (I') of an augmented reality scene, including images (I_{S}) of the background scene and additional images (I_{A}) superimposed on the images (I_{S}) of the background scene.

2. Surgical simulator according to Claim 1, wherein said processing means (X) are arranged to estimate by interpolation the trajectory of a portion of said tubular duct model (AT; B) having no associated sensor means, on the basis of the location data (U_{P}) of at least two predetermined portions of the tubular duct model (AT; B) between which said portion is interposed.

3. Surgical simulator according to Claim 1 or 2, comprising an operating plane (R) for the placement of said physical model (M) of at least one anatomical structure, having a plurality of surface markers (K) visible to said recording means (C) and detectable by said location means (P),
wherein said processing means (X) are arranged to perform a calibration procedure including the determination of the geometric relationship between said reference system (*C*) of the recording means and said reference system (*E*) of the location means, for determining the alignment of the additional image (I_{A}) with respect to the image (I_{S}) of the background scene,
the processing means (X) being arranged to acquire the centroid positions of at least a subset of said plurality of markers (K) in the reference system (*C*) of the recording means and in the reference system (*E*) of the location means.

4. Surgical simulator according to any one of the preceding claims, wherein said tubular duct model (AT; B) has a branched topology including straight portions, curved portions and bifurcations.

5. Surgical simulator according to any one of the preceding claims, wherein tubular duct model (AT; B) includes a tubular structure made of conductive material with at least one conductive wire wound helically around an axis of longitudinal extension of the duct, said conductive wire being preferably a nitinol wire.

6. Surgical simulator according to Claim 5, wherein said tubular structure of conductive material is coated with an electrically insulating material.

7. Surgical simulator according to Claim 6, comprising a surgical instrument (S) including an electrically conductive probe end, adapted to signal a condition of contact between the surgical instrument (S) and the tubular duct model (AT; B).

8. Surgical simulator according to Claim 7, comprising a surgical instrument with sensors (S), adapted to locate a contact condition between the surgical instrument (S) and the tubular duct model (AT; B).

9. Surgical simulator according to Claim 7 or 8, adapted to emit an alarm signal to signal a condition of contact between the surgical instrument (S) and the tubular duct model (AT; B).

10. Surgical simulator according to Claim 9, wherein said processing means (X) are adapted to generate a synthetic additional image including colouring an image region in correspondence with the tubular duct model (AT; B).

11. Surgical simulator according to Claim 9 when dependent on Claim 8, wherein said processing means (X) are adapted to generate a synthetic additional image including colouring an image region at the point of contact between the surgical instrument (S) and the tubular duct model (AT; B).

12. Surgical simulator according to any one of the preceding claims, wherein each of said electromagnetic position sensors (S1-S4) comprises a conductive winding concentric to the longitudinal axis of the associated portion of the tubular duct model (AT; B).

13. Surgical simulator according to Claim 12, wherein each of said electromagnetic position sensors (S1-S4) comprises a conductive winding arranged within an inner tubular volume of the associated portion of said tubular duct model (AT; B).

14. Surgical simulator according to Claim 12 or 13, wherein at least one electromagnetic position sensor (S1-S4) is associated with a rectilinear portion of the tubular duct model (AT; B).

15. Surgical simulator according to any one of Claims 12 to 14, wherein each of said electromagnetic position sensors (S1-S4) has a respective electrical connection passing through an inner tubular volume of said tubular duct model (AT; B) so as to connect the sensor to the signal detecting means of said location means (P), this connection being adapted to convey location signals of the associated portion of the tubular duct model (AT; B).
